# FASCICULE DE BREVET EUROPEEN

(11) **EP 4 110 634 B1**
(45) Date de publication et mention de la délivrance du brevet: **05.06.2024**
(21) Numéro de dépôt: 21708717.0
(22) Date de dépôt: 27.01.2021
(51) Int. Cl.: B60J 1/14, B60J 10/27, B60J 10/70

(54) **VEHICULE AVEC AU MOINS UNE VITRE EN DEUX PARTIES DONT UNE PARTIE BASCULANTE ET UN JOINT DISPOSE ENTRE LES DEUX PARTIES**
FAHRZEUG MIT MINDESTENS EINEM ZWEITEILIGEN FENSTER MIT EINEM KIPPBAREN TEIL UND EINER ZWISCHEN DEN BEIDEN TEILEN ANGEORDNETEN DICHTUNG
VEHICLE WITH AT LEAST ONE TWO-PART WINDOW HAVING A TILTABLE PART AND A SEAL ARRANGED BETWEEN THE TWO PARTS

(30) Priorité: 28.02.2020 FR 2002033
(43) Date de publication de la demande: 04.01.2023
(73) Titulaire: Stellantis Auto SAS, 78300 Poissy (FR)
(72) Inventeur: COENT, Jean Yves, 90300 OFFEMONT (FR); GUILLY, Xavier, 91620 NOZAY (FR); LE FLOCH, Bertrand, 91140 VILLEBON SUR YVETTE (FR); M'BAYE, Karim, 91100 VILLABE (FR); ROY, Christian, 25490 ALLENJOIE (FR)
(86) Numéro de dépôt international: PCT/FR2021/050148
(87) Numéro de publication internationale: WO 2021/170928

(56) Documents cités:
- JP-A- H02 182 535
- JP-U- S54 183 018
- US-A1- 2015 043 051

## Description

L'invention se situe dans le domaine des véhicules automobiles comprenant au moins une vitre en au moins deux parties dont au moins une partie basculante, c'est-à-dire pouvant être déplacée entre une position ouverte et une position fermée par rotation autour d'un axe.

L'utilisation de vitres basculantes est intéressante pour diminuer les coûts de production de certains véhicules automobiles, car elles permettent de s'affranchir des vitres coulissantes qui s'escamotent dans le caisson de porte et dont la réalisation, même en version mécanique, est coûteuse. En effet, les vitres coulissantes intègrent un dispositif de lève-vitre complexe comprenant de nombreuses pièces et engendrent un temps de montage long.

Un exemple d'un véhicule équipé d'une vitre basculante est donné par le document FR2926494. Ce document présente une vitre de porte de véhicule basculante vers le bas depuis une position fermée jusqu'à une position ouverte. La vitre présente dans sa position fermée une face intérieure et comprend au moins un mécanisme de charnière qui est disposé en bas de la vitre, et un mécanisme de fermeture qui est disposé en haut de la vitre, lesdits mécanismes coopérant avec la porte. La vitre peut être manoeuvrée par l'utilisateur du véhicule au moyen d'une poignée disposée sur sa face intérieure et s'ouvre en basculant vers l'extérieur du véhicule.

Il est néanmoins parfois souhaitable de proposer une vitre s'ouvrant seulement en partie et non pas intégralement. Pour ce faire, il a été imaginé des vitres en deux parties dont au moins une partie est mobile. Des véhicules automobiles dont les ouvrants latéraux sont équipés de vitres en deux parties, dont une partie fixe et une partie mobile, sont décrits, par exemple, dans les documents FR1 175210 et FR1066043.

Le document FR1 175210 décrit une glace ouvrante pour une portière de voiture montée de façon pivotante autour d'un axe vertical, ce qui permet à l'usager de faire pivoter cette glace vers l'avant et d'assurer la libre ouverture de sa fenêtre tout en ne demandant qu'une installation simple et un prix de revient peu élevé.

La réalisation d'une vitre en deux parties dont une partie fixe et une partie mobile pose la problématique de l'étanchéité entre les vitres. Cet aspect est absent du document FR1066043, et à peine survolé dans le document FR1175210 qui préconise de disposer d'une bande caoutchouc sur une cornière séparant les deux parties de la vitre. Cette solution bien que simple et intéressante n'est pas satisfaisante en ce qu'elle ne garantit pas une étanchéité entre les deux vitres qui soit compatible avec les exigences actuelles en matière de confort pour l'utilisateur du véhicule. De plus, elle ne permet pas d'éviter les infiltrations d'eau vers l'intérieur du véhicule, le risque d'infiltration étant accentué lorsque la partie mobile de la vitre est montée pivotante selon un axe horizontal. Des solutions restent donc à trouver pour améliorer la situation.

On notera qu'il est également connu de l'art antérieur des vitres de véhicule qui sont pliables. Par exemple, le document EP0453098 décrit une fenêtre pliante comprenant une vitre en deux parties reliées entre elles par une bande pliante montrant un profil en H. La bande pliante adhère aux deux parties de la vitre. Dans ce document, la bande pliante fait à la fois office de charnière et de joint d'étanchéité. Malheureusement, la solution proposée ne permet pas de placer une des parties de la vitre dans une position ouverte. Par ailleurs, les tensions mécaniques imposées à la bande pliante lorsqu'elle est en position pliée peuvent accélérer l'usure de ladite bande. Une vitre ouvrable en deux parties similaire avec un joint entre elles, qui divulgue les caractéristiques du préambule, est divulguée dans le document US 2015/043051 A1.

L'invention a pour objectif de proposer une solution à au moins un des problèmes rencontrés dans l'art antérieur. En particulier, l'invention a pour objectif de proposer un véhicule avec au moins une vitre en deux parties offrant un confort amélioré à son utilisateur notamment en offrant une étanchéité améliorée entre les deux parties de la vitre sans toutefois accélérer l'usure d'un joint disposé entre lesdites parties de la vitre.

A cet effet, et selon un premier aspect, l'invention a pour objet un véhicule comprenant au moins une ouverture et une vitre en deux parties selon la revendication 1.

Comme on l'aura compris à la lecture de la définition qui vient d'en être donnée, l'invention propose un joint d'étanchéité avec une première gorge en forme de U dans laquelle s'insère un des bords de la partie mobile de la vitre. Le dimensionnement de la première gorge en forme de U de sorte à montrer un entrefer supérieur à l'épaisseur de la partie mobile de la vitre va permettre au bord de ladite partie mobile de se dégager du joint d'étanchéité lorsqu'elle est placée en position ouverte et de s'y réinsérer lorsqu'elle est placée en position fermée.

Avantageusement, le bord de la partie mobile est dégagé de la première gorge du joint d'étanchéité lorsque la partie mobile est en position ouverte. Cette caractéristique offre l'avantage de ne pas maintenir le joint d'étanchéité sous contrainte lorsque la partie mobile de la vitre est en position ouverte. Les efforts auxquels est soumis le joint sont donc réduits dans le temps ce qui limite son usure. Par ailleurs, le dégagement du bord de la partie mobile de la vitre offre plus de liberté dans la conception du joint puisque ce dernier n'est pas entraîné avec ledit bord.

Selon l'invention, la largeur de la première gorge telle que définie par l'écartement entre ses parois latérales correspond à au moins 1,2 fois l'épaisseur de la partie mobile de la vitre ; de préférence, au moins 1,4 fois, ou 1,5 fois, ou 1,6 fois, ou 1,8 fois, ou 2 fois l'épaisseur de la partie mobile de la vitre.

Avantageusement, le véhicule comprenant un habitacle, la partie mobile de la vitre comprenant une face interne et une face externe, la face interne étant destinée à être en regard de l'habitacle du véhicule lorsque ladite partie mobile est en position fermée, le véhicule est remarquable en ce que la première gorge comprend une paroi latérale interne et une paroi latérale externe, la paroi latérale interne étant positionnée du côté de l'habitacle du véhicule, et en ce que le joint d'étanchéité est configuré pour que la paroi latérale externe soit disposée écartée de la face externe de la partie mobile de la vitre lorsque celle-ci est en position fermée. Ainsi, la partie mobile de la vitre n'est pas en contact avec ladite paroi latérale externe. Cette absence de contact facilite l'insertion du bord de la partie mobile dans la première gorge lors de la mise en position fermée de la partie mobile. On notera, néanmoins, qu'afin d'assurer l'étanchéité de l'ensemble, le bord de la partie mobile de la vitre est en contact avec la paroi de fond de la première gorge et/ou avec la paroi latérale interne de la première gorge.

Alternativement, le véhicule comprenant un habitacle, la partie mobile de la vitre comprenant une face interne et une face externe, la face interne étant destinée à être en regard de l'habitacle du véhicule lorsque ladite partie mobile est en position fermée, le véhicule est remarquable en ce que la première gorge comprend une paroi latérale interne et une paroi latérale externe, la paroi latérale interne étant positionnée du côté de l'habitacle du véhicule, et en ce que le joint d'étanchéité est configuré pour que la paroi latérale externe soit en contact avec la face externe de la partie mobile de la vitre lorsque celle-ci est en position fermée. L'appui du bord supérieur de la vitre sur le fond de la gorge va, par un effet « culbuto », plaquer au moins en partie la paroi latérale externe contre la surface externe de la vitre. Ce contact permet de renforcer la qualité perçue du véhicule par une effet de type « flush » entre le joint et la vitre. On notera, que dans un tel cas, l'étanchéité de l'ensemble est assuré à la fois par contact entre le bord de la partie mobile de la vitre avec la paroi de fond de la première gorge et avec la paroi latérale externe de la première gorge. Avantageusement, le bord d'extrémité de la paroi latérale externe montre une section arrondie ou en pointe afin de l'éloigner de la surface de la vitre et de lui donner une fonction « casse-goutte ». Cette configuration limite les risques d'infiltration d'eau par capillarité.

Préférentiellement, le véhicule comprenant un habitacle, le véhicule est remarquable en ce que le joint d'étanchéité comprend une deuxième gorge présentant un fond et deux parois latérales, la deuxième gorge étant ouverte selon une direction non-parallèle à la direction d'ouverture de la première gorge. De préférence, une des parois latérales de la deuxième gorge forme la paroi de fond de la première gorge et/ou la deuxième gorge est ouverte en direction de l'habitacle. Cette configuration permet de garantir un rattrapage des dispersions de positionnement entre les deux parties de la vitre et une bonne étanchéité de l'ensemble en donnant une certaine élasticité au joint d'étanchéité lui permettant d'être comprimé par l'insertion du bord de la partie mobile de la vitre dans la première gorge.

Avantageusement, la paroi de fond de la première gorge est inclinée par rapport à un plan passant par le sommet de ses parois latérales. De préférence, la paroi latérale externe montre une hauteur supérieure à la hauteur de la paroi latérale interne. Cette configuration favorise le contact entre le bord de la partie mobile de la vitre et la paroi de fond de la première gorge.

Selon un mode de réalisation, la vitre en deux parties présentant une partie mobile et une autre partie montrant une face interne et une face externe, le véhicule est remarquable en ce que l'autre partie de la vitre est une partie fixe et/ou en ce que le joint d'étanchéité est fixé à l'autre partie de la vitre par une patte de fixation. De préférence, la patte de fixation est dimensionnée pour s'étendre sur toute la longueur du joint d'étanchéité ; et/ou fixée par collage sur une des faces de l'autre partie de la vitre; et/ou la patte de fixation est fixée sur la face interne de l'autre partie de la vitre.

Selon un mode de réalisation préféré, l'axe de rotation autour duquel la partie mobile de la vitre pivote est un axe horizontal. La partie mobile de la vitre s'ouvre donc par basculement vers le haut ou vers le bas.

Selon un mode de réalisation préféré, la partie mobile de la vitre comprenant un bord inférieur et un bord supérieur, le bord reçu dans la première gorge est le bord supérieur de la partie mobile de la vitre. La première gorge est donc ouverte en direction du sol.

Par exemple, l'autre partie de la vitre est une partie fixe et le véhicule comprend un système de charnière comprenant un charnon fixe monté sur la partie fixe de la vitre et un charnon mobile monté sur la partie mobile de la vitre. De préférence, les charnons fixe et mobile sont disposés sur les faces externes des parties fixe et mobile de la vitre.

Selon une mise en oeuvre, le véhicule comprend au moins un ouvrant latéral et est remarquable en ce que au moins une ouverture pouvant être fermée par une vitre en deux parties est agencée sur le ou un de ses ouvrants latéraux.

Selon un deuxième aspect, l'invention a pour objet un joint d'étanchéité selon la revendication 9, destiné à être disposé entre deux parties d'une vitre d'un véhicule selon le premier aspect.

L'invention sera bien décrite et d'autres aspects et avantages apparaîtront clairement à la lecture de la description qui suit donnée en référence aux figures annexées sur lesquelles :
[Fig.1] La figure 1 est une vue partielle en coupe d'un ensemble selon l'invention comprenant une vitre en deux parties avec un joint d'étanchéité disposé entre les parties fixe et mobile de la vitre, la partie mobile étant placée en position fermée de sorte à ce qu'un de ses bords soit inséré dans la première gorge.
[Fig.2] La figure 2 est une vue analogue à celle de la figure 1 mais dans laquelle la partie mobile de la vitre est en position ouverte de sorte à ce que son bord soit dégagé de la première gorge.
[Fig.3] La figure 3 est une vue analogue à celle de la figure 1 mais illustre une variante de l'invention.

Dans la description qui suit, le terme « comprendre » est synonyme de « inclure » et n'est pas limitatif en ce qu'il autorise la présence d'autres éléments ou formes dans le joint d'étanchéité ou le véhicule auquel il se rapporte. Il est entendu que le terme « comprendre » inclut les termes « consister en ». De même, les termes « inférieur », « supérieur », « haut », « bas », « avant » et « arrière » s'entendront par rapport à l'orientation générale du véhicule tel que pris selon son sens normal de marche. Sur les différentes figures, les mêmes références désignent des éléments identiques ou similaires.

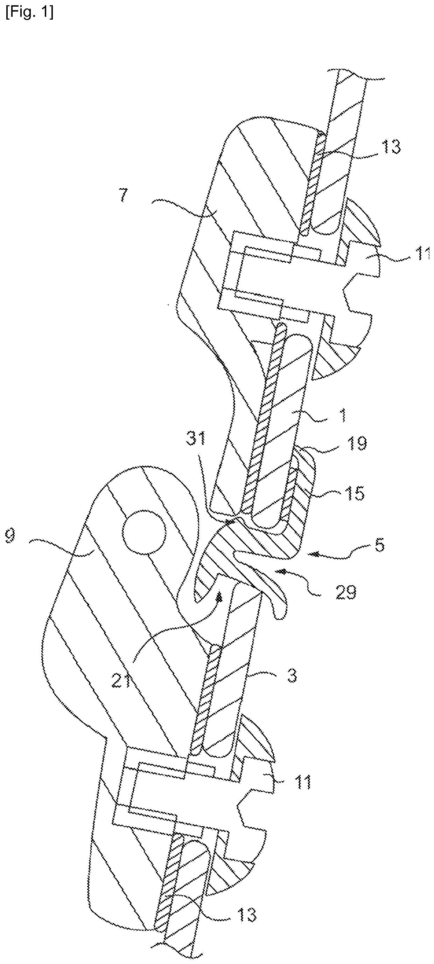

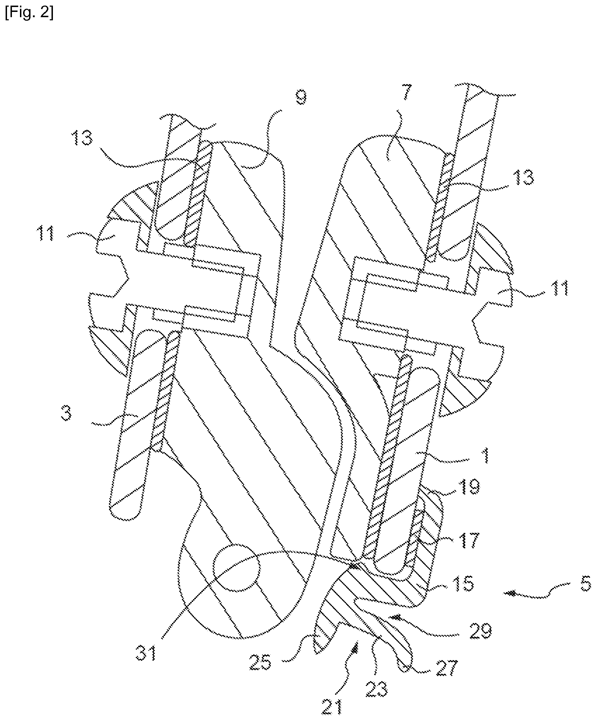

L'invention concerne un véhicule comprenant au moins une ouverture fermée par une vitre en deux parties, à savoir une partie mobile 3 et une autre partie 1. La partie mobile 3 est montée de manière pivotante autour d'un axe entre une position ouverte illustrée en figure 2 et une position fermée illustrée en figure 1. Un joint d'étanchéité 5 est disposé entre les deux parties (1, 3) de la vitre. Dans l'exemple de réalisation illustré et décrit ci-après, l'autre partie est une partie fixe 1.

Néanmoins, l'homme du métier pourra adapter l'invention à une vitre dont les deux parties sont mobiles chacune entre une position ouverte et fermée. Les deux parties sont alors déplacées de manière successive, c'est-à-dire l'une après l'autre, et la partie mobile devient une première partie mobile et l'autre partie devient une deuxième partie mobile. La première partie mobile peut être déplacée entre ses positions ouverte et fermée lorsque la deuxième partie mobile est en position fermée. La deuxième partie mobile peut être déplacée entre ses positions ouverte et fermée lorsque la première partie mobile est en position ouverte. Chacune des parties est dotée d'un mécanisme de charnière coopérant avec un bord de l'ouverture.

Avantageusement, au moins une ouverture pouvant être fermée par une vitre en deux parties est agencée sur un des ouvrants latéraux du véhicule. Il est néanmoins possible d'adapter l'invention à une ouverture agencée au niveau du hayon arrière du véhicule ou au niveau d'une ouverture sur le pavillon de toit.

Le véhicule comprend un habitacle (non représenté), la partie mobile 3 de la vitre comprend une face interne et une face externe. La face interne est destinée à être en regard de l'habitacle du véhicule lorsque ladite partie mobile 3 est en position fermée. La partie mobile 3 de la vitre est avantageusement configurée pour pivoter vers l'extérieur du véhicule. L'invention peut néanmoins être adaptée à un pivotement en direction de l'intérieur du véhicule.

Selon un mode de réalisation préférentiel, les parties fixe et mobile sont alignées lorsque la partie mobile 3 est en position fermée, c'est-à-dire qu'elles sont coplanaires et se succèdent selon une direction donnée. Elles sont disposées dans des plans parallèles ou sécants lorsque la partie mobile 3 est en position ouverte.

L'axe de rotation autour duquel pivote la partie mobile 3 de la vitre peut être horizontal, vertical ou incliné par rapport à la verticale et à l'horizontale ; selon un mode de réalisation préféré illustré sur les figures 1 et 2, l'axe de rotation est horizontal.

Lorsque l'axe de rotation autour duquel pivote la partie mobile 3 de la vitre est horizontal, les parties fixe 1 et mobile 3 sont agencées de manière étagée de sorte à ce qu'une partie soit disposée inférieurement à l'autre partie. Dans un mode de réalisation préféré, la partie mobile de la vitre est disposée inférieurement à la partie fixe. La partie mobile 3 de la vitre peut pivoter par un basculement vers le bas ou vers le haut. Dans la variante non représentée où le véhicule est configuré pour que la partie mobile de la vitre pivote vers le bas, c'est-à-dire en direction du sol, la partie mobile de la vitre porte un mécanisme de charnière coopérant avec le caisson de l'ouvrant latéral du véhicule disposé au niveau du bord inférieur de la partie mobile de la vitre et un mécanisme de fermeture, disposé au niveau du bord supérieur de la partie mobile de la vitre ou au niveau d'un de ses bords latéraux.

Dans l'exemple de réalisation illustré en figures 1 et 2, le véhicule est configuré pour que l'axe autour duquel pivote la partie mobile soit au moins en partie agencé au niveau du joint s'étendant entre les deux parties de la vitre. Par exemple, il s'étend au moins en partie de manière parallèle audit joint d'étanchéité 5. Le véhicule comprend donc un système de charnière comprenant un charnon fixe 7 monté sur la partie fixe 1 de la vitre et un charnon mobile 9 monté sur la partie mobile 3 de la vitre. Les charnons fixe 7 et mobile 9 sont disposés sur les faces externes des parties fixe 1 et mobile 3 de la vitre. Les charnons fixe 7 et mobile 9 peuvent être fixés par tout moyen. Par exemple, ils sont fixés par des vis 11 traversant la vitre au moyen d'ouvertures prévues à cet effet. Le vissage peut être complété par un collage, la présence d'une bande de colle 13 permettant, en outre, de renforcer l'étanchéité de l'ensemble.

Selon un mode de réalisation préféré, le joint d'étanchéité 5 est fixé à la partie fixe 1 de la vitre. Le joint d'étanchéité 5 peut être fixé par tout moyen.

Dans notre exemple, le joint d'étanchéité 5 comprend, aux fins de sa fixation, une patte 15 de fixation dimensionnée pour s'étendre sur au moins une partie de sa longueur ; de préférence sur au moins 50 % de la longueur du joint d'étanchéité 5, et plus préférentiellement sur toute la longueur du joint d'étanchéité 5. La patte 15 de fixation est avantageusement collée sur une des faces de la partie fixe 1 de la vitre au moyen d'un cordon de colle 17. La patte 15 de fixation peut être fixée sur la face interne ou sur la face externe de la partie fixe 1 de la vitre ; de préférence, elle est fixée sur la face interne. Ainsi dans les variantes où un charnon fixe 7 est fixé sur la face externe de la partie fixe 1 de la vitre, le joint d'étanchéité 5 est fixé, par le biais de sa patte 15 de fixation sur la face opposée de la vitre, à savoir la face interne, de ladite partie fixe 1 de la vitre. La face interne est la face orientée en direction de l'habitacle du véhicule, tandis que la face externe est la face orientée vers l'extérieur du véhicule.

Selon un mode de réalisation avantageux, la patte 15 de fixation est bordée par une lèvre 19 se plaçant en appui contre la vitre de manière à protéger le cordon de colle 17 contre l'accumulation de saletés ou d'eau en provenance d'un éventuel ruissèlement sur la face interne de la partie fixe de la vitre.

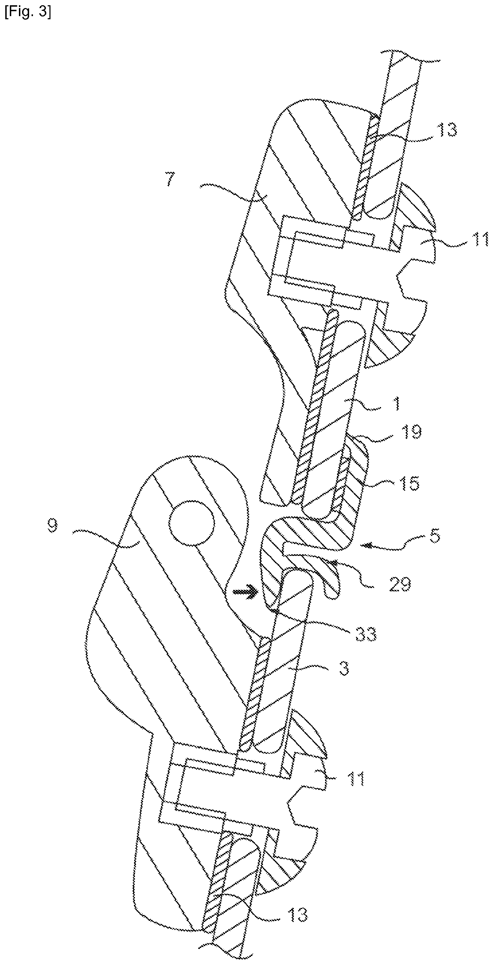

De manière optionnelle, comme illustré en figure 1, le joint d'étanchéité 5 présente un bourrelet 31 s'étendant en direction de la face externe de partie fixe 1. De préférence, le bourrelet 31 forme également une lèvre d'étanchéité s'étendant sur tout ou partie de la longueur du joint d'étanchéité 5. Selon un mode de réalisation préférentiel illustré en figure 3, le joint d'étanchéité 5 est dépourvu d'un bourrelet s'étendant en direction de la face externe de partie fixe 1. Cette configuration réduit le risque d'infiltration d'eau.

Dans un exemple de réalisation non représenté, le joint d'étanchéité montre un canal avec un profil en U dans lequel un des bords de la partie fixe de la vitre est emmanché en vue de la fixation dudit joint. L'emmanchement d'un des bords de la partie fixe de la vitre dans le canal permet au joint d'être retenu sur ledit bord. Au besoin, l'homme du métier pourra renforcer cette retenue par collage.

Le joint d'étanchéité 5 présente une première gorge 21 destinée à recevoir un bord de la partie mobile 3 de la vitre lorsque celle-ci est en position fermée. La première gorge 21 présentant une paroi de fond 23 et deux parois latérales, soit une paroi externe 25 et une paroi interne 27. La première gorge 21 est dimensionnée pour que sa largeur telle que définie par l'écartement entre ses paroi latérales (25, 27) soit supérieure à l'épaisseur de la partie mobile 3 de la vitre. Selon l'invention, la largeur de la première gorge telle que définie par l'écartement entre ses parois latérales correspond à au moins 1,2 fois l'épaisseur de la partie mobile 3 de la vitre, de préférence au moins 1,4 fois, ou 1,5 fois, ou 1,6 fois, ou 1,8 fois ou 2 fois l'épaisseur de la partie mobile 3 de la vitre.

Le dimensionnement de la première gorge 21 va permettre au bord de la partie mobile de la vitre de la pénétrer et de s'en dégager lors des opérations d'ouverture et de fermeture de la vitre. Ainsi, lorsque la partie mobile 3 de la vitre est dans sa position fermée, un de ses bords est reçu dans ladite première gorge 21 comme illustré en figure 1. Tandis que lorsque la partie mobile 3 de la vitre est dans sa position ouverte, ce même bord est dégagé de ladite première gorge 21 comme illustré en figure 2. Selon un mode de réalisation, le bord de la partie mobile 3 de la vitre destiné à être reçu dans la première gorge 21 est le bord supérieur de la partie mobile 3 de la vitre tel que défini lorsque la partie mobile 3 de la vitre est en position fermée.

Selon un mode de réalisation illustré en figure 1, le joint d'étanchéité 5 est configuré pour que la paroi latérale externe soit disposée écartée de la face externe de la partie mobile 3 de la vitre lorsque celle-ci est en position fermée, de manière à ce que la partie mobile 3 de la vitre ne soit pas en contact avec ladite paroi latérale externe. Cette configuration permet de faciliter l'engagement du bord de la partie mobile 3 de la vitre dans la première gorge 21 lors de son passage en position fermée.

Selon un autre mode de réalisation illustré en figure 3, le joint d'étanchéité 5 est configuré pour que la paroi latérale externe soit en contact de la face externe de la partie mobile 3 de la vitre lorsque celle-ci est en position fermée. L'engagement du bord de la partie mobile 3 de la vitre dans la première gorge lors de son passage en position fermée est toujours facilité par les dimensions relatives de la première gorge et du bord de la vitre de la partie mobile. Néanmoins, le joint d'étanchéité 5 est configuré pour que la mise en interférence du bord de la vitre avec le fond de la première gorge fasse basculer la paroi externe en direction de la surface externe de la vitre jusqu'à se placer en appui sur cette dernière. La direction de basculement est indiquée avec une flèche. En d'autres termes, l'appui du bord supérieur de la vitre sur le fond de la gorge va plaquer au moins en partie la paroi latérale externe contre la surface externe de la vitre par un effet de type culbuto. Avantageusement, le bord d'extrémité 33 de la paroi externe du joint montre une section arrondie ou en pointe afin de l'éloigner de la surface de la vitre et de lui donner une fonction « casse-goutte ». Il est donc avantageux que la paroi externe ne soit en contact avec la surface externe de la vitre que sur une portion de sa hauteur.

Par ailleurs, la première gorge 21 étant préférentiellement ouverte en direction du bas, la présence d'une paroi latérale externe 25 permet à ce que l'eau ruisselant à l'extérieur du véhicule sur le joint d'étanchéité 5 goute depuis le bord de la paroi latérale externe 25 en direction du sol. L'eau ruisselante n'est pas ainsi guidée vers la partie mobile 3 de la vitre ce qui limite les risques d'infiltration d'eau dans l'habitacle.

Selon des modes de réalisation, le joint d'étanchéité 5 comprend une deuxième gorge 29 présentant un fond et deux parois latérales. La deuxième gorge 29 est orientée pour être ouverte selon une direction non-parallèle à la direction d'ouverture de la première gorge 21. La deuxième gorge 29 montre un profil forme de U ou en forme de V ; de préférence, en forme de V. Selon le mode de réalisation illustré en figures 1 et 2, la deuxième gorge 29 est ouverte en direction de l'habitacle. Avantageusement, une de ses parois latérales est confondue avec la paroi de fond 23 de la première gorge 21. La présence d'une deuxième gorge 29 dans le joint d'étanchéité 5 offre plusieurs avantages. Elle est avantageusement dimensionnée pour être refermée, au moins en partie, par la poussée du bord de la partie mobile 3 de la vitre lorsqu'il pénètre dans la première gorge 21 et que la partie mobile 3 de la vitre est placée en position fermée. D'une part, cela permet de s'assurer d'un contact entre le bord de la partie mobile 3 de la vitre et la paroi de fond 23 de la première gorge 21 et donc d'assurer l'étanchéité de l'ensemble. D'autre part cela permet d'assurer cette étanchéité tout en absorbant les éventuelles dispersions de positionnement entre la partie fixe 1 et la partie mobile 3 de la vitre.

Ainsi le joint d'étanchéité est un profilé montrant une section en forme de Y inversé ou formant la lettre grecque minuscule Pi.

Dans des modes de réalisation, la paroi de fond 23 de la première gorge 21 est inclinée par rapport à un plan passant par le sommet de ses parois latérales (25, 27). Ainsi, les parois latérales (25, 27) de la première gorge 21 montrent des hauteurs différentes. De préférence, la paroi latérale externe 25 montre une hauteur supérieure à la hauteur de la paroi latérale interne 27. Cette configuration permet de garantir un contact entre le bord de la partie mobile de la vitre et la paroi de fond 23 de la première gorge 21 lorsqu'il est inséré dans ladite première gorge 21. Lorsque la première gorge est ouverte selon une direction verticale et orientée soit vers le haut soit vers le bas, la paroi de fond est inclinée par rapport à un plan horizontal. Lorsque la première gorge est ouverte selon une direction horizontale et orientée soit vers l'avant soit vers l'arrière du véhicule, la paroi de fond est inclinée par rapport à un plan vertical perpendiculaire à une des faces de la vitre lorsqu'elle est en position fermée.

Préférentiellement, le joint d'étanchéité 5 est un profilé fabriqué en matériau thermoplastique élastomère, par exemple en élastomère thermoplastique de polyuréthane, en élastomère thermoplastique styrénique, en copolyester thermoplastique ou en copolyamide thermoplastique. Un exemple de matériau thermoplastique élastomère utilisé est l'EPDM (éthylène-propylène-diène monomère).

## Revendications

1. Véhicule comprenant au moins une ouverture et une vitre en deux parties (1, 3) dont au moins une partie mobile (3), l'ouverture étant adaptée pour être fermée par la vitre en deux parties (1, 3), ladite partie (3) étant mobile en ce qu'elle est montée de manière pivotante autour d'un axe de rotation et en ce qu'elle est déplaçable entre une position ouverte et une position fermée ; et un joint d'étanchéité (5) disposé entre les deux parties (1, 3) de la vitre, le joint d'étanchéité (5) présentant une première gorge (21) destinée à recevoir un bord de la partie mobile (3) de la vitre lorsque celle-ci est en position fermée, et la première gorge (21) présentant une paroi de fond (23) et deux parois latérales (25, 27), et est dimensionnée pour que sa largeur telle que définie par l'écartement entre ses paroi latérales (25, 27) soit supérieure à l'épaisseur de la partie mobile (3) de la vitre, **caractérisé en ce que** le bord de la partie mobile (3) est dégagé de la première gorge (21) du joint d'étanchéité (5) lorsque la partie mobile (3) est en position ouverte ; et/ou **en ce que** la largeur de la première gorge (21) telle que définie par l'écartement entre ses parois latérales (25, 27) correspond à au moins 1,2 fois l'épaisseur de la partie mobile (3) de la vitre, de préférence au moins 1,5 fois l'épaisseur de la partie mobile (3) de la vitre.

2. Véhicule selon la revendication 1, le véhicule comprenant un habitacle, la partie mobile (3) de la vitre comprenant une face interne et une face externe, la face interne étant destinée à être en regard de l'habitacle du véhicule lorsque ladite partie mobile (3) est en position fermée, le véhicule est **caractérisé en ce que** la première gorge (21) comprend une paroi latérale interne (27) et une paroi latérale externe (25), la paroi latérale interne (27) étant positionnée du côté de l'habitacle du véhicule, et **en ce que** le joint d'étanchéité (5) est configuré pour que la paroi latérale externe (25) soit en contact la face externe de la partie mobile (3) de la vitre lorsque celle-ci est en position fermée ; de préférence, le bord d'extrémité (33) de la paroi latérale externe (25) montre une section arrondie ou en pointe.

3. Véhicule selon la revendication 1 ou 2, le véhicule comprenant un habitacle, le véhicule est **caractérisé en ce que** le joint d'étanchéité (5) comprend une deuxième gorge (29) présentant un fond et deux parois latérales, la deuxième gorge étant ouverte selon une direction non-parallèle à la direction d'ouverture la première gorge (21) ; de préférence, une des parois latérales de la deuxième gorge (29) forme la paroi de fond (23) de la première gorge (21) et/ou la deuxième gorge (29) est ouverte en direction de l'habitacle.

4. Véhicule selon l'une des revendications 1 à 3, **caractérisé en ce que** la paroi de fond (23) de la première gorge (21) est inclinée par rapport à un plan passant par le sommet de ses parois latérales (25, 27) ; de préférence, la paroi latérale externe (25) montre une hauteur supérieure à la hauteur de la paroi latérale interne (27).

5. Véhicule selon l'une des revendications 1 à 4, la vitre en deux parties présentant une partie mobile (3) et une autre partie montrant une face interne et une face externe, le véhicule est **caractérisé en ce que** l'autre partie de la vitre est une partie fixe (1) et/ou **en ce que** le joint d'étanchéité (5) est fixé à l'autre partie de la vitre par une patte (15) de fixation ; de préférence, la patte (15) de fixation est dimensionnée pour s'étendre sur toute la longueur du joint d'étanchéité (5) ; et/ou la patte (15) de fixation est fixée par collage sur une des faces de l'autre partie de la vitre; et/ou fixée sur la face interne de l'autre partie de la vitre.

6. Véhicule selon l'une des revendications 1 à 5, **caractérisé en ce que** l'axe de rotation autour duquel la partie mobile (3) de la vitre pivote est un axe horizontal ; et/ou ce que la partie mobile (3) de la vitre comprenant un bord inférieur et un bord supérieur, le bord reçu dans la première gorge (21) est le bord supérieur de la partie mobile (3) de la vitre.

7. Véhicule selon l'une des revendications 1 à 6, **caractérisé en ce que** l'autre partie de la vitre est une partie fixe (1) et **en ce qu'**il comprend un système de charnière comprenant un charnon fixe (7) monté sur la partie fixe (1) de la vitre et un charnon mobile (9) monté sur la partie mobile (3) de la vitre ; de préférence, les charnons fixe (7) et mobile (9) sont disposés sur les faces externes des parties fixe (1) et mobile (3) de la vitre.

8. Véhicule selon l'une des revendications 1 à 7, le véhicule comprenant au moins un ouvrant latéral et est **caractérisé en ce que** au moins une ouverture pouvant être fermée par une vitre en deux parties est agencée sur le ou un de ses ouvrants latéraux.

9. Joint d'étanchéité (5) destiné à être disposé entre deux parties d'une vitre d'un véhicule selon l'une des revendications 1 à 8, le joint d'étanchéité (5) présentant une première gorge (21) destinée à recevoir un bord de la partie mobile (3) de la vitre lorsque celle-ci est en position fermée, et la première gorge (21) présentant une paroi de fond (23) et deux parois latérales (25, 27), et est dimensionnée pour que sa largeur telle que définie par l'écartement entre ses paroi latérales (25, 27) soit supérieure à l'épaisseur de la partie mobile (3) de la vitre; **caractérisé en ce que** la largeur de la première gorge (21) telle que définie par l'écartement entre ses parois latérales (25, 27) correspond à au moins 1,2 fois l'épaisseur de la partie mobile (3) de la vitre, de préférence au moins 1,5 fois l'épaisseur de la partie mobile (3) de la vitre; aussi de préférence : le joint d'étanchéité (5) comprend une deuxième gorge (29) présentant un fond et deux parois latérales et ouverte selon une direction non-parallèle à la direction d'ouverture de la première gorge (21) ; et/ou la paroi de fond (23) de la première gorge (21) est inclinée par rapport à un plan passant par le sommet de ses parois latérales ; et/ou le joint d'étanchéité (5) présente une patte (15) de fixation destinée à sa fixation par collage.

## Patentansprüche

1. Fahrzeug mit mindestens einer Öffnung und einer zweiteiligen Scheibe (1, 3), von denen mindestens ein bewegliches Teil (3) ist, wobei die Öffnung durch die zweiteilige Scheibe (1, 3) geschlossen werden kann, wobei das Teil (3) beweglich ist, indem es um eine Drehachse schwenkbar gelagert ist und zwischen einer offenen und einer geschlossenen Position bewegbar ist; und eine zwischen den beiden Teilen (1, 3) der Scheibe angeordnete Dichtung (5), wobei die Dichtung (5) eine erste Nut (21) zur Aufnahme eines Randes des beweglichen Teils (3) der Scheibe in der geschlossenen Stellung und die erste Nut (21) eine Bodenwand (23) und zwei Seitenwände (25, 27) aufweist und dimensioniert ist so ausgebildet, dass seine Breite, wie sie durch den Abstand zwischen seinen Seitenwänden (25, 27) definiert ist, größer ist als die Dicke des beweglichen Teils (3) der Scheibe, **dadurch gekennzeichnet, dass** der Rand des beweglichen Teils (3) von der ersten Nut (21) der Dichtung (5) in geöffneter Stellung des beweglichen Teils (3) freiliegt; und/oder dadurch, dass die Breite der ersten Nut (21), wie sie durch den Abstand zwischen ihren Seitenwänden (25, 27) definiert ist, mindestens dem 1,2-fachen der Dicke des beweglichen Teils (3) der Scheibe, vorzugsweise mindestens dem 1,5-fachen der Dicke des beweglichen Teils (3) der Scheibe entspricht.

2. Fahrzeug nach Anspruch 1, wobei das Fahrzeug einen Fahrgastraum umfasst, wobei der bewegliche Teil (3) der Scheibe eine Innenfläche und eine Außenfläche umfasst, wobei die Innenfläche dem Fahrgastraum des Fahrzeugs gegenüberstehen soll, wenn sich der bewegliche Teil (3) in der geschlossenen Position befindet, wobei das Fahrzeug **dadurch gekennzeichnet ist, dass** die erste Nut (21) eine innere Seitenwand (27) und eine äußere Seitenwand (25) umfasst die innere Seitenwand (27) auf der Seite des Innenraums des Fahrzeugs positioniert ist, und dass die Dichtung (5) so ausgebildet ist, dass die äußere Seitenwand (25) die äußere Seite des beweglichen Teils (3) der Scheibe in seiner geschlossenen Stellung berührt; Vorzugsweise weist der Endrand (33) der äußeren Seitenwand (25) einen abgerundeten oder spitz zulaufenden Querschnitt auf.

3. Fahrzeug nach Anspruch 1 oder 2, wobei das Fahrzeug einen Fahrgastraum umfasst, das Fahrzeug **dadurch gekennzeichnet ist, dass** die Dichtung (5) eine zweite Nut (29) mit einem Boden und zwei Seitenwänden umfasst, wobei die zweite Nut in einer Richtung nicht parallel zur Öffnungsrichtung der ersten Nut (21) geöffnet ist; Vorzugsweise bildet eine der Seitenwände der zweiten Nut (29) die Bodenwand (23) der ersten Nut (21) und/oder die zweite Nut (29) ist in Richtung auf den Innenraum hin offen.

4. Fahrzeug nach einem der Ansprüche 1 bis 3, **dadurch gekennzeichnet, dass** die Bodenwand (23) der ersten Nut (21) in Bezug auf eine Ebene geneigt ist, die durch die Oberseite ihrer Seitenwände (25, 27) verläuft; Vorzugsweise weist die äußere Seitenwand (25) eine Höhe auf, die größer ist als die Höhe der inneren Seitenwand (27).

5. Fahrzeug nach einem der Ansprüche 1 bis 4, wobei die zweiteilige Scheibe einen beweglichen Teil (3) und einen weiteren Teil aufweist, der eine Innenseite und eine Außenseite aufweist, wobei das Fahrzeug **dadurch gekennzeichnet ist, dass** der andere Teil der Scheibe ein feststehender Teil (1) ist und/oder dass die Dichtung (5) an dem anderen Teil der Scheibe durch eine Befestigungslasche (15) befestigt ist; Vorzugsweise ist die Befestigungslasche (15) so bemessen, dass sie sich über die gesamte Länge der Dichtung (5) erstreckt, und/oder die Befestigungslasche (15) wird auf einer der Seiten des anderen Teils der Scheibe geklebt; und/oder an der Innenseite des anderen Teils der Scheibe befestigt ist.

6. Fahrzeug nach einem der Ansprüche 1 bis 5, **dadurch gekennzeichnet, dass** die Drehachse, um die der bewegliche Teil (3) der Scheibe gedreht wird, eine horizontale Achse ist; und/oder dass der bewegliche Teil (3) der Scheibe einen unteren und einen oberen Rand aufweist, wobei der in der ersten Nut (21) aufgenommene Rand der obere Rand des beweglichen Teils (3) der Scheibe ist.

7. Fahrzeug nach einem der Ansprüche 1 bis 6, **dadurch gekennzeichnet, dass** der andere Teil der Scheibe ein feststehender Teil (1) ist und ein Scharniersystem umfasst, das einen feststehenden Scharnier (7) umfasst, der an dem feststehenden Teil (1) der Scheibe angebracht ist, und einen beweglichen Scharnier (9), der an dem beweglichen Teil (3) der Scheibe angebracht ist; Vorzugsweise sind die feststehenden (7) und die beweglichen (9) Scharniere an den Außenseiten der feststehenden (1) und beweglichen (3) Teile der Scheibe angeordnet.

8. Fahrzeug nach einem der Ansprüche 1 bis 7, wobei das Fahrzeug mindestens einen seitlichen Flügel aufweist und **dadurch gekennzeichnet ist, dass** mindestens eine durch eine zweiteilige Scheibe verschließbare Öffnung an dem oder einem seiner seitlichen Flügel angeordnet ist.

9. Dichtung (5) zur Anordnung zwischen zwei Teilen einer Fahrzeugscheibe nach einem der Ansprüche 1 bis 8, wobei die Dichtung (5) eine erste Nut (21) zur Aufnahme eines Randes des beweglichen Teils (3) der Scheibe in der geschlossenen Position aufweist und die erste Nut (21) eine Bodenwand (23) und zwei Teile aufweist Seitenwände (25, 27) und so bemessen, dass ihre Breite, wie sie durch den Abstand zwischen ihren Seitenwänden (25, 27) definiert ist, größer ist als die Dicke des beweglichen Teils (3) der Scheibe; Die Breite der ersten Nut (21), wie sie durch den Abstand zwischen ihren Seitenwänden (25, 27) definiert ist, entspricht mindestens dem 1,2-fachen der Dicke des beweglichen Teils (3) der Scheibe, vorzugsweise mindestens dem 1,5-fachen der Dicke des beweglichen Teils (3) der Scheibe, vorzugsweise Die Dichtung (5) umfasst eine zweite Nut (29) mit einem Boden und zwei Seitenwänden, die in einer Richtung nicht parallel zur Öffnungsrichtung der ersten Nut (21) offen ist. und/oder die Bodenwand (23) der ersten Nut (21) ist in Bezug auf eine Ebene geneigt, die durch die Oberseite ihrer Seitenwände verläuft; und/oder die Dichtung (5) weist eine Befestigungslasche (15) zur Klebebefestigung auf.

## Claims

1. A vehicle consisting of at least one opening and a glass pane in two parts (1, 3), of which at least one moving part (3), the opening being adapted to be closed by the glass pane in two parts (1, 3), the opening being movable in that part (3) is swiveled around a axis of rotation and is movable between an open position and a position closed; and a seal (5) placed between the two parts (1, 3) of the glass, the seal (5) having a first throat (21) intended to receive a edge of the moving part (3) of the glass when it is in the closed position, and the first throat (21) with a bottom wall (23) and two side walls (25, 27), and is dimensioned so that its width as defined by the gap between its lateral walls (25, 27) is greater than the thickness of the moving part (3) of the glass, **characterized by** the edge of the moving part (3) being cleared from the first throat (21) of the seal (5) when the moving part (3) is in the open position; and/or the width of the first throat (21) as defined by the gap between its lateral walls (25, 27) corresponds to at least 1.2 times the thickness of the moving part (3) of the glass, preferably at least 1.5 times the thickness of the moving part (3) of the glass.

2. A vehicle according to Claim 1, where the vehicle includes a passenger compartment, the moving part (3) of the window comprising an inner face and an outer face, the inner face being intended to be next to the passenger compartment of the vehicle when the said moving part (3) is in the closed position, the vehicle is characterized as the first throat (21) includes an inner side wall (27) and an outer side wall (2) 5), the inner side wall (27) being positioned on the side of the vehicle compartment, and the seal (5) is configured to make the outer side wall (25) contact the outer face of the moving part (3) of the glass when the glass is in the closed position; preferably, the end edge (33) of the outer side wall (25) shows a rounded or pointed section.

3. A vehicle according to claim 1 or 2, the vehicle having a passenger compartment, the vehicle is **characterized in that** the seal (5) includes a second throat (29) with a bottom and two side walls, the second throat being opened in a direction not parallel to the opening direction the first throat (21); preferably, one of the lateral walls of the second throat (29) forms the bottom wall (23) of the first throat (21) and/or the second throat (29) is opened towards the cabin.

4. Vehicle according to one of the claims 1 to 3, **characterized by** the bottom wall (23) of the first throat (21) being inclined from a plane passing through the top of its side walls (25, 27); preferably, the outer side wall (25) shows a height higher than the height of the inner side wall (27).

5. A vehicle according to one of the claims 1 to 4, the two-part window having a moving part (3) and another part showing an inner face and an outer face, the vehicle is characterized as the other part of the glass is a fixed part (1) and/or as the seal (5) is attached to the other part of the glass by a paw (15) (b) fastening; preferably, the attachment leg (15) is sized to extend over the entire length of the seal (5); and/or the fixing leg (15) is fixed by gluing on one of the faces of the other part of the window; and/or attached to the inner face of the other part of the window.

6. Vehicle according to one of claims 1 to 5, characterized as the axis of rotation around which the moving part (3) of the window rotates is a horizontal axis; and/or that the moving part (3) of the glass comprising a lower edge and a higher edge, the edge received in the first throat (21) is the upper edge of the moving part (3) of the glass.

7. Vehicle according to one of claims 1 to 6, characterized as the other part of the glass is a fixed part (1) and includes a hinge system consisting of a fixed hinge (7) mounted on the fixed part (1) of the glass and a mobile hinge (9) mounted on the movable part (3) of the glass; preferably, the fixed (7) and mobile (9) hinges are placed on the outer faces of the fixed (1) and mobile (3) parts of the window.

8. A vehicle in accordance with one of Claims 1 to 7, a vehicle consisting of at least one side opening and is **characterized in that** at least one opening that can be closed by a two-part window is arranged on the side opening(s) of the vehicle.

9. Sealant (5) intended to be placed between two parts of a glass pane of a vehicle in accordance with one of the claims 1 to 8, the sealant (5) having a first throat (21) intended to receive a edge of the moving part (3) of the glass when it is in a closed position, and the first throat (21) having a bottom wall (23) and two side walls (25, 27), and is sized so that its width as defined by the gap between its side walls (25, 27) is greater than the thickness of the moving part (3) of the glass; characterized as the width of the first throat (21) as defined by the gap between its lateral walls (25,27) corresponds to at least 1,2 times the thickness of the moving part (3) of the glass, preferably at least 1,5 times the thickness of the moving part (3) of the glass; preferably also: the seal (5) includes a second throat (29) with a bottom and two side walls and opened in a direction not parallel to the opening direction of the first throat (21); and/or the bottom wall (23) of the first throat (21) is inclined from a plane passing through the top of its side walls; and/or the seal (5) has a fastening leg (15) for its fastening by gluing.
